# EUROPEAN PATENT APPLICATION

(11) **EP 4 039 593 A1**
(43) Date of publication of application: **10.08.2022**
(21) Application number: 22151643.8
(22) Date of filing: 14.01.2022
(51) Int. Cl.: B64C 39/02, B60L 3/00, H02H 3/00, B63H 21/00

(54) **FAULT-TOLERANT POWER DISTRIBUTION WITH POWER SOURCE SELECTION IN A VEHICLE**

(30) Priority: 09.02.2021 US 202163147540 P
(71) Applicant: Aurora Flight Sciences Corporation, a subsidiary of The Boeing Company, Manassas VA 20110 (US)
(72) Inventor: YU, Wenjiang, Virginia, 20110 (US); PERKINSON, James, Virginia, 20110 (US)
(74) Representative: Boult Wade Tennant LLP

(57) **Abstract**

A vehicle is provided that includes a basic structure; and coupled to the basic structure, a plurality of power sources, a propulsion system and power distribution circuitry. The propulsion system includes a plurality of electric motors configured to power a plurality of propulsors to generate propulsive forces that cause the vehicle to move. The power distribution circuitry is configured to deliver direct current electric power from the plurality of power sources to the plurality of electric motors. The power distribution circuitry electrically couples the plurality of power sources to the plurality of electric motors in an interleaved topology in which electric motors of the plurality of electric motors are alternately, electrically coupled to power sources of the plurality of power sources. Each of the electric motors in the interleaved topology is electrically coupled to a different one of the power sources than immediately adjacent ones of the electric motors.

## Description

### TECHNOLOGICAL FIELD

The present disclosure relates generally to electric power distribution and, in particular, to electric power distribution in electrically-powered systems such as those onboard vehicles.

### BACKGROUND

Electric and hybrid vehicles such as aerial vehicles, road vehicles and the like are powered by sources of electric power such as batteries. These vehicles generally include one or more power sources, and a propulsion system one or more electric motors configured to power one or more propulsors to generate propulsive forces that cause the vehicle to move. Depending on the vehicle, these propulsors may include rotors, propellers, wheels and the like. The propulsion system may also include a drivetrain configured to deliver power from the electric motors to the propulsors; and for some vehicles, the electric motors and drivetrain may in some contexts be referred to as the powertrain of the vehicle.

In many of these vehicles, electric power from the power sources is distributed to the electric motors via a centralized electric power distribution box designed to facilitate electric source switchover and back up in cases of certain failure modes. Existing power distribution designs usually have multiple channels of power sources, with centralized monitoring and a control unit to detect failures and control connections between sources and loads. Some design instances use additional channel via a dissimilar apparatus, and this channel is designed to have higher reliability for certain equipment such as navigation equipment in the case of air vehicles.

### BRIEF SUMMARY

As explained above, existing power distribution designs in electric and hybrid vehicles have provided back-up or failure isolation with a centralized electric power distribution box. New propulsion architectures in vehicles that use distributed propulsors driven by individual electric motors at the propulsors has provided opportunity to simplify the centralized electric power distribution box with self-arbitration between the available power sources, and improved back up and failure isolation coverage as well as propulsion system reliability.

Examples of the present disclosure are directed to electric power distribution and, in particular, to electric power distribution in electrically-powered systems such as those onboard vehicles. A vehicle according to some examples includes a plurality of power sources, and a propulsion system including a plurality of electric motors configured to power a plurality of propulsors. The vehicle also includes power distribution circuitry that electrically couples the plurality of power sources to the plurality of electric motors, such as in an interleaved topology in which electric motors of the plurality of electric motors are alternately, electrically coupled to power sources of the plurality of power sources. Examples employ self-control fault tolerance that selects between power sources based on their condition as operating normally or having a fault or failure.

The present disclosure thus includes, without limitation, the following examples.

Some examples provide a vehicle comprising: a basic structure; and coupled to the basic structure, a plurality of power sources; a propulsion system including a plurality of electric motors configured to power a plurality of propulsors to generate propulsive forces that cause the vehicle to move; and power distribution circuitry configured to deliver direct current (DC) electric power from the plurality of power sources to the plurality of electric motors, the power distribution circuitry electrically coupling the plurality of power sources to the plurality of electric motors in an interleaved topology in which electric motors of the plurality of electric motors are alternately, electrically coupled to power sources of the plurality of power sources, each of the electric motors electrically coupled to a different one of the power sources than immediately adjacent ones of the electric motors.

In some examples of the vehicle of any preceding example, or any combination of any preceding examples, the plurality of propulsors include one or more of rotors, propellers or wheels.

In some examples of the vehicle of any preceding example, or any combination of any preceding examples, each of the electric motors is electrically coupled to a different one of the power sources than the immediately adjacent ones of the electric motors in either or both direction of a pitch axis or a roll axis of the vehicle.

In some examples of the vehicle of any preceding example, or any combination of any preceding example, the basic structure includes an airframe with a fuselage and one or more pairs of wings that extend from opposing sides of the fuselage, the plurality of electric motors are mounted to the one or more pairs of wings, and each wing has multiple ones of the electric motors mounted to the wing.

In some examples of the vehicle of any preceding example, or any combination of any preceding examples, the multiple ones of the electric motors include at least a first electric motor and a second electric motor electrically coupled to respectively a first and a second of the power sources.

In some examples of the vehicle of any preceding example, or any combination of any preceding examples, the power distribution circuitry includes: a plurality of electric power buses electrically coupling the plurality of power sources to groups of the plurality of electric motors; a plurality of switches electrically coupled to and between the plurality of power sources and the plurality of electric power buses, the plurality of switches closed during normal operation of the plurality of power sources; one or more bus tie switches electrically coupled to and between power buses of the plurality of power sources, the one or more bus tie switches open during normal operation of the plurality of power sources; and power control circuitry configured to open one of the plurality of switches to disconnect a first of the plurality of power sources from a first of the plurality of electric power buses, and close one of the one or more bus tie switches to connect the first of the plurality of electric power buses to a second of the plurality of electric power buses, automatically in direct response to a fault or failure at the first of the plurality of power sources.

In some examples of the vehicle of any preceding example, or any combination of any preceding examples, the first of the plurality of electric power buses and the second of the plurality of electric power buses electrically couples the first of the plurality of power sources and a second of the plurality of power sources to respectively first and second groups of the plurality of electric motors, and wherein the power control circuitry is configured to open the one of the plurality of switches and close the one of the one or more bus tie switches to electrically couple the second of the plurality of power sources to the first and second groups of the plurality of electric motors.

In some examples of the vehicle of any preceding example, or any combination of any preceding examples, the power distribution circuitry includes: a plurality of electric power buses electrically coupling the plurality of power sources to the plurality of electric motors; and a plurality of source-selection circuitries that are separate and independent, and electrically coupled to and between the plurality of electric power buses and the plurality of electric motors, and wherein a group of the plurality of source-selection circuitries is configured to switchably connect a first of the plurality of electric power buses and thereby a first of the plurality of power sources to a first group of the plurality of electric motors during normal operation of the first of the plurality of power sources, and a second of the plurality of electric power buses and thereby a second of the plurality of power sources to the first group of the plurality of electric motors automatically in direct response to a fault or failure at the first of the plurality of power sources.

In some examples of the vehicle of any preceding example, or any combination of any preceding examples, a second group of the plurality of source-selection circuitries is configured to switchably connect the second of the plurality of electric power buses to a second group of the plurality of electric motors during normal operation of the second of the plurality of power sources, and the first of the plurality of electric power buses to the second group of the plurality of electric motors automatically in direct response to the fault or failure at the second of the plurality of power sources.

In some examples of the vehicle of any preceding example, or any combination of any preceding examples, the power distribution circuitry includes: a plurality of electric power buses electrically coupling the plurality of power sources to the plurality of electric motors; a plurality of source-selection circuitries that are separate and independent, and electrically coupled to and between the plurality of power sources and the plurality of electric power buses, and wherein a source-selection circuitry of the plurality of source-selection circuitries is configured to switchably connect a first of the plurality of power sources to a first of the plurality of electric power buses during normal operation of the first of the plurality of power sources, and a second of the plurality of power sources to the first of the plurality of electric power buses automatically in direct response to a fault or failure at the first of the plurality of power sources.

In some examples of the vehicle of any preceding example, or any combination of any preceding examples, a second source-selection circuitry of the plurality of source-selection circuitries is configured to switchably connect the second of the plurality of power sources to the second of the plurality of electric power buses during normal operation of the second of the plurality of power sources, and the first of the plurality of power sources to the second of the plurality of electric power buses automatically in direct response to the fault or failure at the second of the plurality of power sources.

In some examples of the vehicle of any preceding example, or any combination of any preceding examples, the power distribution circuitry includes: a plurality of electric power buses with a plurality of feeders electrically coupling the plurality of power sources to the plurality of electric motors; and a plurality of interlocks electrically coupled to and between the plurality of feeders across the plurality of electric power buses, including interlocks configured to electrically couple feeders of a first of the plurality of electric power buses to different feeders of different ones of others of the plurality of electric power buses, automatically and in direct response to a fault or failure at a first of the plurality of power sources electrically coupled to the first of the plurality of electric power buses.

In some examples of the vehicle of any preceding example, or any combination of any preceding examples, the interlocks include switches that are open during normal operation of the plurality of power sources, and the interlocks are configured to close a first of the switches to connect a first feeder of the first of the plurality of electric power buses and one of the feeders of a second of the plurality of electric power buses, and close a second of the switches to connect a second feeder of the first of the plurality of electric power buses and one of the feeders of a third of the plurality of electric power buses.

Some examples provide a method of managing power in a vehicle, the method comprising: providing the vehicle including a plurality of power sources, a propulsion system including a plurality of electric motors configured to power a plurality of propulsors to generate propulsive forces that cause the vehicle to move, and power distribution circuitry; and delivering direct current (DC) electric power from the plurality of power sources to the plurality of electric motors via the power distribution circuitry electrically coupling the plurality of power sources to the plurality of electric motors in an interleaved topology in which electric motors of the plurality of electric motors are alternately, electrically coupled to power sources of the plurality of power sources, each of the electric motors electrically coupled to a different one of the power sources than immediately adjacent ones of the electric motors.

In some examples of the method of any preceding example, or any combination of any preceding examples, delivering the DC electric power includes delivering the DC electric power via the power distribution circuitry in which each of the electric motors is electrically coupled to a different one of the power sources than the immediately adjacent ones of the electric motors in either or both direction of a pitch axis or a roll axis of the vehicle.

In some examples of the method of any preceding example, or any combination of any preceding examples, providing the vehicle includes providing the vehicle further including an airframe with a fuselage and one or more pairs of wings that extend from opposing sides of the fuselage, the plurality of electric motors are mounted to the one or more pairs of wings, and each wing has multiple ones of the electric motors mounted to the wing.

In some examples of the method of any preceding example, or any combination of any preceding examples, delivering the DC electric power includes delivering the DC electric power via the power distribution circuitry in which the multiple ones of the electric motors include at least a first electric motor and a second electric motor electrically coupled to respectively a first and a second of the power sources.

In some examples of the method of any preceding example, or any combination of any preceding examples, the power distribution circuitry includes a plurality of electric power buses electrically coupling the plurality of power sources to groups of the plurality of electric motors, a plurality of switches electrically coupled to and between the plurality of power sources and the plurality of electric power buses, and one or more bus tie switches electrically coupled to and between power buses of the plurality of power sources, the plurality of switches and the one or more bus tie switches respectively closed and open during normal operation of the plurality of power sources, and wherein the method further comprises opening one of the plurality of switches to disconnect a first of the plurality of power sources from a first of the plurality of electric power buses, and closing one of the one or more bus tie switches to connect the first of the plurality of electric power buses to a second of the plurality of electric power buses, automatically in direct response to a fault or failure at the first of the plurality of power sources.

In some examples of the method of any preceding example, or any combination of any preceding examples, the first of the plurality of electric power buses and the second of the plurality of electric power buses electrically couples the first of the plurality of power sources and a second of the plurality of power sources to respectively first and second groups of the plurality of electric motors, and wherein the one of the plurality of switches is opened, and the one of the one or more bus tie switches is closed, to electrically couple the second of the plurality of power sources to the first and second groups of the plurality of electric motors.

In some examples of the method of any preceding example, or any combination of any preceding examples, the power distribution circuitry includes a plurality of electric power buses electrically coupling the plurality of power sources to the plurality of electric motors, and a plurality of source-selection circuitries that are separate and independent, and electrically coupled to and between the plurality of electric power buses and the plurality of electric motors, and wherein the method further comprises a group of the plurality of source-selection circuitries switchably connecting a first of the plurality of electric power buses and thereby a first of the plurality of power sources to a first group of the plurality of electric motors during normal operation of the first of the plurality of power sources, and a second of the plurality of electric power buses and thereby a second of the plurality of power sources to the first group of the plurality of electric motors automatically in direct response to a fault or failure at the first of the plurality of power sources.

In some examples of the method of any preceding example, or any combination of any preceding examples, the method further comprises a second group of the plurality of source-selection circuitries switchably connecting the second of the plurality of electric power buses to a second group of the plurality of electric motors during normal operation of the second of the plurality of power sources, and the first of the plurality of electric power buses to the second group of the plurality of electric motors automatically in direct response to the fault or failure at the second of the plurality of power sources.

In some examples of the method of any preceding example, or any combination of any preceding examples, the power distribution circuitry includes a plurality of electric power buses electrically coupling the plurality of power sources to the plurality of electric motors, and a plurality of source-selection circuitries that are separate and independent, and electrically coupled to and between the plurality of power sources and the plurality of electric power buses, and wherein the method further comprises a source-selection circuitry of the plurality of source-selection circuitries switchably connecting a first of the plurality of power sources to a first of the plurality of electric power buses during normal operation of the first of the plurality of power sources, and a second of the plurality of power sources to the first of the plurality of electric power buses automatically in direct response to a fault or failure at the first of the plurality of power sources.

In some examples of the method of any preceding example, or any combination of any preceding examples, the method further comprises a second source-selection circuitry of the plurality of source-selection circuitries switchably connecting the second of the plurality of power sources to the second of the plurality of electric power buses during normal operation of the second of the plurality of power sources, and the first of the plurality of power sources to the second of the plurality of electric power buses automatically in direct response to the fault or failure at the second of the plurality of power sources.

In some examples of the method of any preceding example, or any combination of any preceding examples, the power distribution circuitry includes a plurality of electric power buses with a plurality of feeders electrically coupling the plurality of power sources to the plurality of electric motors, and a plurality of interlocks electrically coupled to and between the plurality of feeders across the plurality of electric power buses, and wherein the method further comprises interlocks of the plurality of interlocks electrically coupling feeders of a first of the plurality of electric power buses to different feeders of different ones of others of the plurality of electric power buses, automatically and in direct response to a fault or failure at a first of the plurality of power sources electrically coupled to the first of the plurality of electric power buses.

In some examples of the method of any preceding example, or any combination of any preceding examples, the interlocks include switches that are open during normal operation of the plurality of power sources, and wherein the interlocks electrically coupling the feeders includes the interlocks closing a first of the switches to connect a first feeder of the first of the plurality of electric power buses and one of the feeders of a second of the plurality of electric power buses, and closing a second of the switches to connect a second feeder of the first of the plurality of electric power buses and one of the feeders of a third of the plurality of electric power buses.

These and other features, examples, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example described herein. This disclosure is intended to be read holistically such that any separable features or elements of the disclosure, in any of its examples, should be viewed as combinable unless the context of the disclosure clearly dictates otherwise.

It will therefore be appreciated that this Brief Summary is provided merely for purposes of summarizing some examples so as to provide a basic understanding of some examples of the disclosure. Accordingly, it will be appreciated that the above described examples should not be construed to narrow the scope of the disclosure in any way. Other examples and advantages will become apparent from the following detailed description taken in conjunction with the accompanying figures which illustrate, by way of example, the principles of some described examples.

### BRIEF DESCRIPTION OF THE FIGURE(S)

Having thus described examples of the disclosure in general terms, reference will now be made to the accompanying figures, which are not necessarily drawn to scale, and wherein:
FIGS. 1A and 1B illustrate one type of vehicle, namely, an aircraft;
FIGS. 2, 3, 4 and 5 illustrate power distribution circuitry; and
FIGS. 6A, 6B, 6C, 6D, 6E, 6F and 6G are flowcharts illustrating various steps in a method of managing power in a vehicle.

### DETAILED DESCRIPTION

Some examples of the present disclosure will now be described more fully hereinafter with reference to the accompanying figures, in which some, but not all examples of the disclosure are shown. Indeed, various examples of the disclosure may be embodied in many different forms and should not be construed as limited to the examples set forth herein; rather, these examples are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably.

Examples of the present disclosure relate generally to electric power distribution and, in particular, to electric power distribution in electrically-powered systems such as those onboard vehicles. As used herein, a vehicle is a machine designed as an instrument of conveyance by land, water or air. A vehicle designed and configurable to fly may at times be referred to as an aerial vehicle or aircraft. A vehicle designed and configurable to operate with at least some level of autonomy may at times be referred to as an autonomous vehicle, or an autonomous aerial vehicle or aircraft in the case of an autonomous vehicle that is also designed and configurable to fly. Other examples of suitable vehicles include a variety of road vehicles, railed vehicles, watercraft (surface vessels, underwater vessels), amphibious vehicles, spacecraft and the like. In some examples, the vehicle is an electric vehicle such as an electric road or rail vehicle, an electric aircraft, an electric spacecraft or the like.

The vehicle may be manned or unmanned. The vehicle may be fully human-controlled, or the vehicle may be semi-autonomous or autonomous in which at least some of its maneuvers are executed independent of or with minimal human intervention. In some examples, the vehicle is operable in various modes with various amounts of human control.

A vehicle generally includes a basic structure; and coupled to the basic structure, a power source, power distribution circuitry and a propulsion system. The basic structure is the main supporting structure of the vehicle to which other components are attached. The basic structure is the load-bearing framework of the vehicle that structurally supports the vehicle in its construction and function. In various contexts, the basic structure may be referred to as a chassis, an airframe or the like.

The power source is a source of power such as electric power from which the vehicle is powered to move; and in some examples, the vehicle includes multiple or a plurality of power sources. Examples of suitable power sources include batteries, solar panels, fuel cells, electric generators and the like. The power distribution circuitry includes power transmission lines, power electronics and other circuitry for distribution of power from the power source to an electrical load such as the propulsion system and other onboard electronics.

The propulsion system includes one or more electric motors configured to power one or more propulsors to generate propulsive forces that cause the vehicle to move. Although not separately shown, in some examples, one or more motor controllers may be included to coordinate performance of the one or more electric motors. A propulsor is any of a number of different means of converting power into a propulsive force. Examples of suitable propulsors include rotors, propellers, wheels and the like. In some examples, the propulsion system includes a drivetrain configured to deliver power from the electric motors to the propulsors. The electric motors and drivetrain may in some contexts be referred to as the powertrain of the vehicle.

The vehicle may also include any of a number of other systems, subsystems, components and the like. In particular, for example, the vehicle may include a vehicle management system (VMS). The VMS is a vehicle-specific subsystem configured to manage subsystems and other components of the vehicle. These subsystems and other components include, for example, maneuver controls, landing gear, onboard environmental systems, electrical, pneumatic and hydraulic systems, communications systems, navigation systems and other subsystems and components for controlling operation and maneuvering of the vehicle. The VMS is configured to accept maneuver commands such as waypoints and/or steering commands, and control the vehicle to follow those maneuver commands.

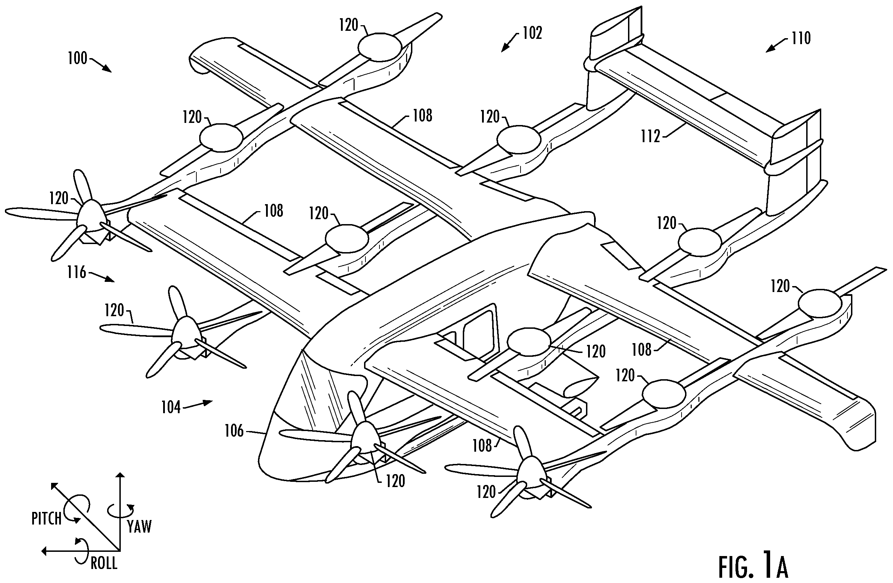

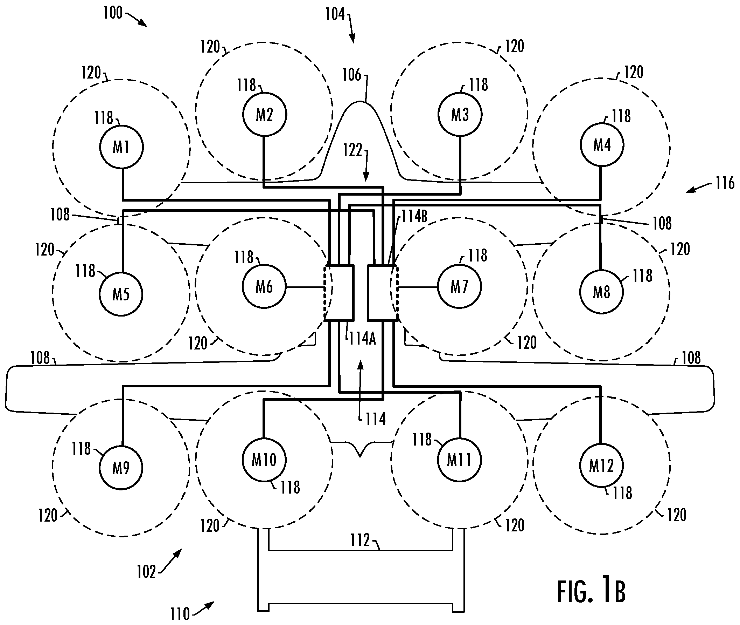

FIGS. 1A and 1B illustrate one type of vehicle **100,** namely, an aircraft, that may benefit from examples of the present disclosure. As shown, the vehicle generally includes a basic structure **102** with an airframe **104** with including a fuselage **106,** and one or more pairs of wings **108** that extend from opposing sides of the fuselage. The airframe also includes an empennage or tail assembly **110** at a rear end of the fuselage, and the tail assembly includes a stabilizer **112.**

The vehicle **100** includes a plurality of power sources **114,** and a propulsion system **116** including a plurality of electric motors **118** configured to power a plurality of propulsors **120** to generate propulsive forces that cause the vehicle to move. The vehicle as shown includes twelve electric motors (labeled M1 - M12), and the propulsors are rotors. Depending on the vehicle, in various examples, the propulsors include one or more of rotors, propellers or wheels. Also in the vehicle as shown, the plurality of electric motors are mounted to the one or more pairs of wings **108,** and each wing has multiple ones of the electric motors mounted to the wing. As also shown, power distribution circuitry **122** electrically couples the plurality of power sources to the plurality of electric motors. The power distribution circuitry is configured to deliver electric power from the plurality of power sources to the plurality of electric motors.

As shown more particularly in FIG. 1B, according to some examples of the present disclosure, the power distribution circuitry **122** electrically couples the plurality of power sources **114** to the plurality of electric motors **118** in an interleaved topology. In some examples of this topology, electric motors of the plurality of electric motors are alternately, electrically coupled to power sources of the plurality of power sources. Each of the electric motors is electrically coupled to a different one of the power sources than immediately adjacent ones of the electric motors. In some examples, each of the electric motors is electrically coupled to a different one of the power sources than the immediately adjacent ones of the electric motors in either or both direction of a pitch axis or a roll axis of the vehicle.

The interleaved topology in which the power distribution circuitry **122** electrically couples the plurality of power sources **114** to the plurality of electric motors **118** may be implemented in a number of different manners depending on the need or role of the electric motors. In the vehicle **100** as shown, the first row of propulsors **120** are tilted relative to the other rows of propulsors. The first row of propulsors is primarily responsible for transition and forward flight (i.e., forward thrust). Higher redundancy may be required for the first row of propulsors relative to the other rows of propulsors. In other configurations, the electrical coupling may be distributed in a different manner or level.

In some examples in which the vehicle **100** is an aircraft, the plurality of electric motors **118** are mounted to the one or more pairs of wings **108,** and each wing has multiple ones of the electric motors mounted to the wing. In some of these examples, the multiple ones of the electric motors include at least a first electric motor and a second electric motor electrically coupled to respectively a first and a second of the power sources **114A, 114B.** As shown, in particular, the multiple ones of the electric motors may include first electric motors **M1, M3, M6, M8, M9, M11**, and second electric motors **M2, M4, M5, M7, M10, M12** electrically coupled to respectively the first and the second of the power sources.

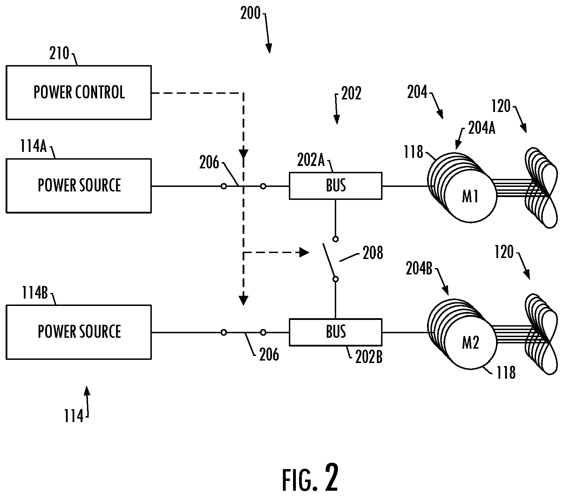

FIGS. 2, 3, 4 and 5 illustrate power distribution circuitry that in various examples may correspond to the power distribution circuitry **122** shown in FIGS. 1A and 1B. The power distribution circuitry is shown and described herein in the context of a vehicle including a number of power sources, electric motors and propulsors. The numbers of these and other components shown in the figures are provided by way of example and should not be taken as limiting. The power distribution circuitry according to the various examples may electrically couple any number of power sources to any number of electric motors, according to examples of the present disclosure.

FIG. 2 illustrates power distribution circuitry **200** according to some examples. As shown, the power distribution circuitry **200** includes a plurality of electric power buses **202** electrically coupling the plurality of power sources **114** to groups **204** of the plurality of electric motors **118.** The power distribution circuitry includes a plurality of switches **206** electrically coupled to and between the plurality of power sources and the plurality of electric power buses, and one or more bus tie switches 208 electrically coupled to and between power buses of the plurality of power sources. The plurality of switches are closed during normal operation of the plurality of power sources, and the one or more bus tie switches are open during normal operation of the plurality of power sources.

As also shown, the power distribution circuitry includes power control circuitry **210** configured to control the plurality of switches **206** and the one or more bus tie switches **208** based on conditions of the plurality of power sources **114.** Although not separately shown, the power control circuitry may include bus sensing circuitry, which may be implemented in a number of different manners. The bus sensing circuitry may be implemented using relays to sense input states of the plurality of power sources, and control the plurality of switches and the one or more bus tie switches. Other examples include sensing the input states of the plurality of power sources with voltage transducers, controlling the plurality of switches and the one or more bus tie switches with solid-state switches, and the like.

According to some examples, the power control circuitry **210** is configured to open one of the plurality of switches **206** to disconnect a first of the plurality of power sources **114A** from a first of the plurality of electric power buses **202A,** and close one of the one or more bus tie switches **208** to connect the first of the plurality of electric power buses to a second of the plurality of electric power buses **202B.** In this regard, the power control circuitry is configured to open and close the respective switches, automatically in direct response to a fault or failure at the first of the plurality of power sources.

In some further examples, the first of the plurality of electric power buses **202A** and the second of the plurality of electric power buses **202B** electrically couple the first of the plurality of power sources **114A** and a second of the plurality of power sources **114B** to respectively first and second groups **204A, 204B** of the plurality of electric motors **118.** In some of these examples, the power control circuitry **210** is configured to open the one of the plurality of switches **206** and close the one of the one or more bus tie switches **208** to electrically couple the second of the plurality of power sources to the first and second groups of the plurality of electric motors.

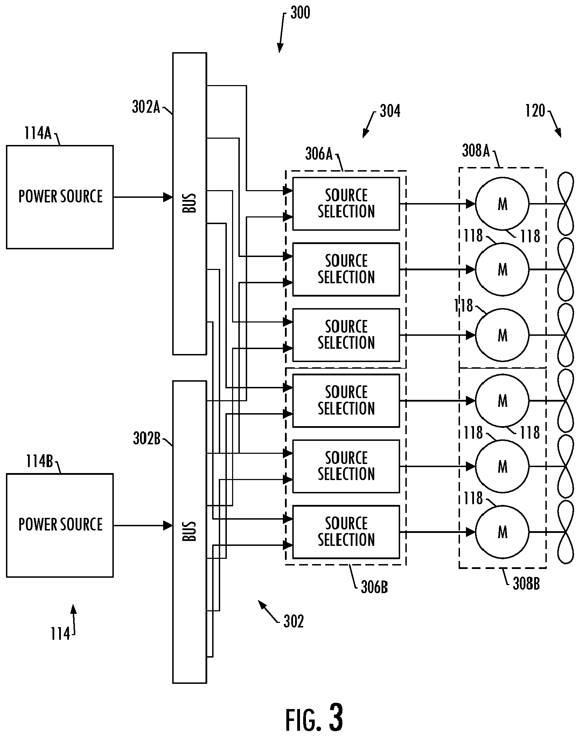

FIG. 3 illustrates power distribution circuitry **300** according to other examples. As shown, the power distribution circuitry **300** includes a plurality of electric power buses **302** electrically coupling the plurality of power sources **114** to the plurality of electric motors **118.** The power distribution circuitry includes a plurality of source-selection circuitries **304** that are separate and independent, and electrically coupled to and between the plurality of electric power buses and the plurality of electric motors.

According to some examples, a group **306A** of the plurality of source-selection circuitries **304** is configured to switchably connect a first or a second of the plurality of electric power buses **302A, 302B,** and thereby a first or a second of the plurality of power sources **114A, 114B,** to a first group **308A** of the plurality of electric motors **118** based on conditions of the plurality of power sources **114.** In this regard, in some examples, the plurality of source-selection circuitries is configured to connect the first of the plurality of electric power buses, and thereby the first of the plurality of power sources, to the first group of the plurality of electric motors during normal operation of the first of the plurality of power sources. The plurality of source-selection circuitries is configured to connect the second of the plurality of electric power buses, and thereby the second of the plurality of power sources, to the first group of the plurality of electric motors automatically in direct response to a fault or failure at the first of the plurality of power sources.

In some further examples, a second group **306B** of the plurality of source-selection circuitries **304** is configured to switchably connect the first or the second of the plurality of electric power buses **302A, 302B,** and thereby the first or a second of the plurality of power sources **114A, 114B,** to a second group **308B** of the plurality of electric motors **118** based on conditions of the plurality of power sources **114.** The second group of the plurality of source-selection circuitries is configured to connect the second of the plurality of electric power buses to the second group of the plurality of electric motors during normal operation of the second of the plurality of power sources. The second group of the plurality of source-selection circuitries is configured to connect the first of the plurality of electric power buses to the second group of the plurality of electric motors automatically in direct response to the fault or failure at the second of the plurality of power sources.

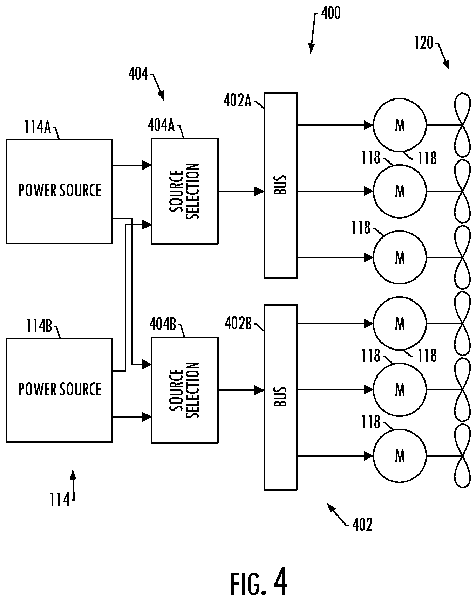

FIG. 4 illustrates power distribution circuitry **400** according to yet other examples. As shown, the power distribution circuitry **400** includes a plurality of electric power buses **402** electrically coupling the plurality of power sources **114** to the plurality of electric motors **118.** The power distribution circuitry includes a plurality of source-selection circuitries **404** that are separate and independent, and electrically coupled to and between the plurality of power sources and the plurality of electric power buses.

According to some of these examples, a source-selection circuitry **404A** of the plurality of source-selection circuitries **404** is configured to switchably connect a first or a second of the plurality of power sources **114A, 114B** to a first of the plurality of electric power buses **402A** based on a condition of the first of the plurality of power sources. The source-selection circuitry is configured to connect the first of the plurality of power sources to the first of the plurality of electric power buses during normal operation of the first of the plurality of power sources. The source-selection circuitry is configured to connect the second of the plurality of power sources to the first of the plurality of electric power buses automatically in direct response to a fault or failure at the first of the plurality of power sources.

In some further examples, a second source-selection circuitry **404B** of the plurality of source-selection circuitries **404** is configured to switchably connect a first or a second of the plurality of power sources **114A, 114B** to a second of the plurality of electric power buses **402B** based on a condition of the second of the plurality of power sources. The second source-selection circuitry is configured to connect the second of the plurality of power sources to the second of the plurality of electric power buses during normal operation of the second of the plurality of power sources. And the second source-selection circuitry is configured to connect the first of the plurality of power sources to the second of the plurality of electric power buses automatically in direct response to the fault or failure at the second of the plurality of power sources.

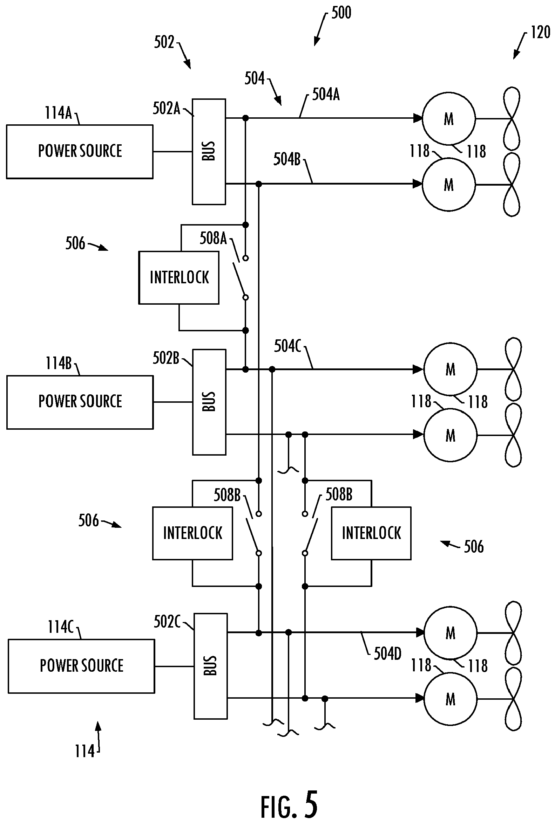

FIG. 5 illustrates power distribution circuitry **500** according to some examples. As shown, the power distribution circuitry **500** includes a plurality of electric power buses **502** with a plurality of feeders **504** electrically coupling the plurality of power sources **114** to the plurality of electric motors **118.** The power distribution circuitry also includes a plurality of interlocks **506** electrically coupled to and between the plurality of feeders across the plurality of electric power buses. This includes interlocks configured to electrically couple feeders of a first of the plurality of electric power buses **502A** to different feeders of different ones of others of the plurality of electric power buses **502B, 502C,** automatically and in direct response to a fault or failure at a first of the plurality of power sources **114A** electrically coupled to the first of the plurality of electric power buses.

In some further examples, the interlocks include switches **508** that are open during normal operation of the plurality of power sources **114.** In some of these examples, the interlocks are configured to close a first of the switches **508A** to connect a first feeder **504A** of the first of the plurality of electric power buses **502A** and one of the feeders **504C** of a second of the plurality of electric power buses **502B.** Likewise, the interlocks are configured to close a second of the switches **508B** to connect a second feeder **504B** of the first of the plurality of electric power buses and one of the feeders **504D** of a third of the plurality of electric power buses **502C.**

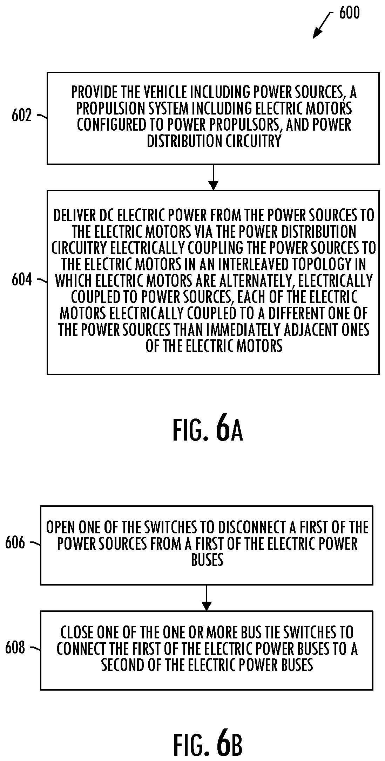

FIGS. 6A-6G are flowcharts illustrating various steps in a method **600** of managing power in a vehicle **100,** according to various examples. The method includes providing the vehicle including a plurality of power sources **114,** a propulsion system **116** including a plurality of electric motors **118** configured to power a plurality of propulsors **120** to generate propulsive forces that cause the vehicle to move, and power distribution circuitry **122,** as shown at block **602** of FIG. 6A. The method also includes delivering direct current DC electric power from the plurality of power sources to the plurality of electric motors via the power distribution circuitry electrically coupling the plurality of power sources to the plurality of electric motors in an interleaved topology, as shown at block **604.** Again, in this topology, which electric motors of the plurality of electric motors are alternately, electrically coupled to power sources of the plurality of power sources, each of the electric motors electrically coupled to a different one of the power sources than immediately adjacent ones of the electric motors.

In some examples, delivering the DC electric power at block **604** includes delivering the DC electric power via the power distribution circuitry **122** in which each of the electric motors **118** is electrically coupled to a different one of the power sources **114** than the immediately adjacent ones of the electric motors in either or both direction of a pitch axis or a roll axis of the vehicle **100.**

In some examples, providing the vehicle **100** at block **602** includes providing the vehicle further including an airframe **104** with a fuselage **106** and one or more pairs of wings **108** that extend from opposing sides of the fuselage. In some of these examples, the plurality of electric motors **118** are mounted to the one or more pairs of wings, and each wing has multiple ones of the electric motors mounted to the wing.

In some examples, delivering the DC electric power at block **604** includes delivering the DC electric power via the power distribution circuitry **122** in which the multiple ones of the electric motors **118** include at least a first electric motor (e.g., **M1, M3, M6, M8, M9, M11**) and a second electric motor (e.g., **M2, M4, M5, M7, M10, M12**) electrically coupled to respectively a first and a second of the power sources **114A, 114B.**

In some examples, the power distribution circuitry **122, 200** includes a plurality of electric power buses **202** electrically coupling the plurality of power sources **114** to groups **204** of the plurality of electric motors **118.** The power distribution circuitry also includes a plurality of switches **206** electrically coupled to and between the plurality of power sources and the plurality of electric power buses, and one or more bus tie switches **208** electrically coupled to and between power buses of the plurality of power sources. The plurality of switches and the one or more bus tie switches respectively closed and open during normal operation of the plurality of power sources.

Also in some of these examples, the method **600** further includes opening one of the plurality of switches to disconnect a first of the plurality of power sources **114A** from a first of the plurality of electric power buses **202A,** as shown at block **606** of FIG. 6B. The method also includes closing one of the one or more bus tie switches to connect the first of the plurality of electric power buses to a second of the plurality of electric power buses **202B,** automatically in direct response to a fault or failure at the first of the plurality of power sources, as shown at block **608.**

In some further examples, the first of the plurality of electric power buses **202A** and the second of the plurality of electric power buses **202B** electrically couples the first of the plurality of power sources **114A** and a second of the plurality of power sources **114B** to respectively first and second groups **204A, 204B** of the plurality of electric motors **118.** In some of these examples, the one of the plurality of switches is opened at block **606,** and the one of the one or more bus tie switches is closed at block **608,** to electrically couple the second of the plurality of power sources to the first and second groups of the plurality of electric motors.

In some examples, the power distribution circuitry **122, 300** includes a plurality of electric power buses **302** electrically coupling the plurality of power sources **114** to the plurality of electric motors **118.** The power distribution circuitry also includes a plurality of source-selection circuitries **304** that are separate and independent, and electrically coupled to and between the plurality of electric power buses and the plurality of electric motors.

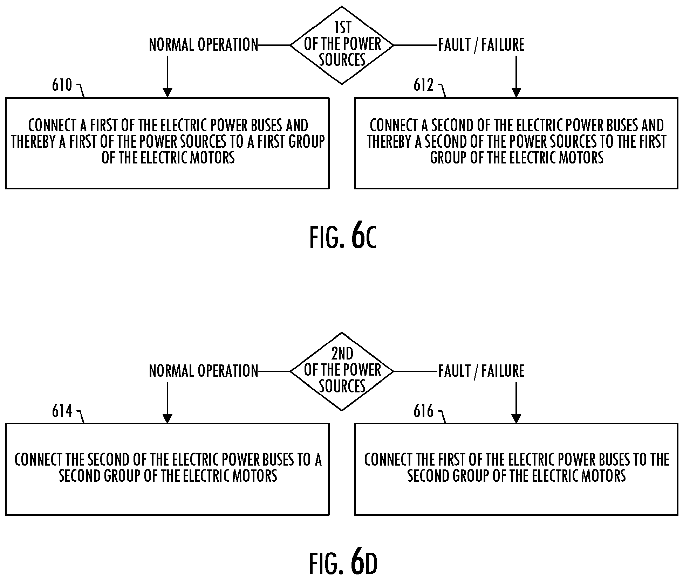

Also in some of these examples, the method **600** further includes a group **306A** of the plurality of source-selection circuitries switchably connecting a first or a second of the plurality of electric power buses **302A,** and thereby a first or a second of the plurality of power sources **114A,** to a first group **308A** of the plurality of electric motors, as shown at blocks **610** and **612** of FIG. 6C. The group of the plurality of source-selection circuitries connect the first of the plurality of electric power buses (and thereby the first of the plurality of power sources) to the first group of the plurality of electric motors during normal operation of the first of the plurality of power sources. And the group of the plurality of source-selection circuitries connect the second of the plurality of electric power buses (and thereby the second of the plurality of power sources) to the first group of the plurality of electric motors automatically in direct response to a fault or failure at the first of the plurality of power sources.

In some further examples, the method **600** further includes a second group **306B** of the plurality of source-selection circuitries switchably connecting the first or the second of the plurality of electric power buses **302A,** and thereby the first or the second of the plurality of power sources **114A,** to a first group **308A** of the plurality of electric motors, as shown at blocks **614** and **616** of FIG. 6D. The second group of the plurality of source-selection circuitries connect the second of the plurality of electric power buses (and thereby the second of the plurality of power sources) to the second group of the plurality of electric motors during normal operation of the second of the plurality of power sources. And the second group of the plurality of source-selection circuitries connect the first of the plurality of electric power buses (and thereby the first of the plurality of power sources) to the second group of the plurality of electric motors automatically in direct response to a fault or failure at the second of the plurality of power sources.

In some examples, the power distribution circuitry **122, 400** includes a plurality of electric power buses **402** electrically coupling the plurality of power sources **114** to the plurality of electric motors **118.** The power distribution circuitry also includes a plurality of source-selection circuitries **404** that are separate and independent, and electrically coupled to and between the plurality of power sources and the plurality of electric power buses.

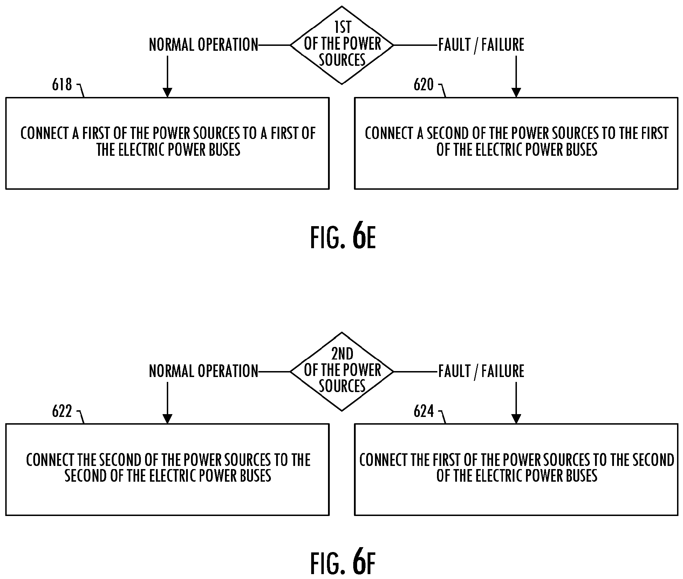

The method **600** in some of these examples further includes a source-selection circuitry **404A** of the plurality of source-selection circuitries **404** switchably connecting a first or a second of the plurality of power sources **114A, 114B** to a first of the plurality of electric power buses **402A,** as shown at blocks **618** and **620** of FIG. 6E. The source-selection circuitry connects the first of the plurality of power sources to the first of the plurality of electric power buses during normal operation of the first of the plurality of power sources. And the source-selection circuitry connects the second of the plurality of power sources to the first of the plurality of electric power buses automatically in direct response to a fault or failure at the first of the plurality of power sources.

In some further examples, the method **600** further includes a second source-selection circuitry **404B** of the plurality of source-selection circuitries **404** switchably connecting the first or the second of the plurality of power sources **114A, 114B** to a second of the plurality of electric power buses **402B,** as shown at blocks **622** and **624** of FIG. 6F. The second source-selection circuitry connects the second of the plurality of power sources to the second of the plurality of electric power buses during normal operation of the second of the plurality of power sources. And the second source-selection circuitry connects the first of the plurality of power sources to the second of the plurality of electric power buses automatically in direct response to a fault or failure at the second of the plurality of power sources.

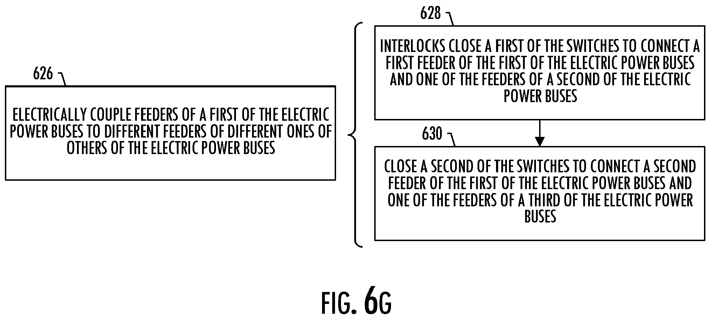

In some examples, the power distribution circuitry **122, 500** includes a plurality of electric power buses **502** with a plurality of feeders **504** electrically coupling the plurality of power sources **114** to the plurality of electric motors **118,** and a plurality of interlocks **506** electrically coupled to and between the plurality of feeders across the plurality of electric power buses. In some of these examples, the method **600** further includes interlocks of the plurality of interlocks electrically coupling feeders of a first of the plurality of electric power buses **502A** to different feeders of different ones of others of the plurality of electric power buses **502B, 502C,** automatically and in direct response to a fault or failure at a first of the plurality of power sources **114A** electrically coupled to the first of the plurality of electric power buses, as shown at block **626** of FIG. 6G.

In some further examples, the interlocks include switches **508** that are open during normal operation of the plurality of power sources **114.** In some of these examples, the interlocks electrically coupling the feeders at block **626** includes the interlocks closing a first of the switches **508A** to connect a first feeder **504A** of the first of the plurality of electric power buses **502A** and one of the feeders **504C** of a second of the plurality of electric power buses **502B,** as shown at block **628.** The interlocks also close a second of the switches **508B** to connect a second feeder **504B** of the first of the plurality of electric power buses and one of the feeders **504D** of a third of the plurality of electric power buses **502C,** as shown at block **630.**

Many modifications and other examples of the disclosure set forth herein will come to mind to one skilled in the art to which the disclosure pertains having the benefit of the teachings presented in the foregoing description and the associated figures. Therefore, it is to be understood that the disclosure is not to be limited to the specific examples disclosed and that modifications and other examples are intended to be included within the scope of the appended claims. Moreover, although the foregoing description and the associated figures describe examples in the context of certain example combinations of elements and/or functions, it should be appreciated that different combinations of elements and/or functions may be provided by alternative examples without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The disclosure comprises the subject matter described in the following clauses:
Clause 1. A vehicle (100) comprising: a basic structure (102); and coupled to the basic structure, a plurality of power sources (114); a propulsion system (116) including a plurality of electric motors (118) configured to power a plurality of propulsors (120) to generate propulsive forces that cause the vehicle to move; and power distribution circuitry (122) configured to deliver direct current (DC) electric power from the plurality of power sources to the plurality of electric motors, the power distribution circuitry electrically coupling the plurality of power sources to the plurality of electric motors in an interleaved topology in which electric motors of the plurality of electric motors are alternately, electrically coupled to power sources of the plurality of power sources, each of the electric motors electrically coupled to a different one of the power sources than immediately adjacent ones of the electric motors.
Clause 2. The vehicle (100) of clause 1, wherein the plurality of propulsors (120) include one or more of rotors, propellers or wheels.
Clause 3. The vehicle (100) of clause 1 or clause 2, wherein each of the electric motors (118) is electrically coupled to a different one of the power sources (114) than the immediately adjacent ones of the electric motors in either or both direction of a pitch axis or a roll axis of the vehicle.
Clause 4. The vehicle (100) of any of the clauses above, wherein the basic structure (102) includes an airframe (104) with a fuselage (106) and one or more pairs of wings (108) that extend from opposing sides of the fuselage, the plurality of electric motors (118) are mounted to the one or more pairs of wings, and each wing has multiple ones of the electric motors mounted to the wing.
Clause 5. The vehicle (100) of clause 4, wherein the multiple ones of the electric motors (118) include at least a first electric motor (M1, M3, M6, M8, M9, M11) and a second electric motor (M2, M4, M5, M7, M10, M12) electrically coupled to respectively a first and a second of the power sources (114A, 114B).
Clause 6. The vehicle (100) of any of the clauses above, wherein the power distribution circuitry (122, 200) includes: a plurality of electric power buses (202) electrically coupling the plurality of power sources (114) to groups (204) of the plurality of electric motors (118); a plurality of switches (206) electrically coupled to and between the plurality of power sources and the plurality of electric power buses, the plurality of switches closed during normal operation of the plurality of power sources; one or more bus tie switches (208) electrically coupled to and between power buses of the plurality of power sources, the one or more bus tie switches open during normal operation of the plurality of power sources; and power control circuitry (210) configured to open one of the plurality of switches to disconnect a first of the plurality of power sources (114A) from a first of the plurality of electric power buses (202A), and close one of the one or more bus tie switches to connect the first of the plurality of electric power buses to a second of the plurality of electric power buses (202B), automatically in direct response to a fault or failure at the first of the plurality of power sources.
Clause 7. The vehicle (100) of clause 6, wherein the first of the plurality of electric power buses (202A) and the second of the plurality of electric power buses (202B) electrically couples the first of the plurality of power sources (114A) and a second of the plurality of power sources (114B) to respectively first and second groups (204A, 204B) of the plurality of electric motors (118), and wherein the power control circuitry (210) is configured to open the one of the plurality of switches and close the one of the one or more bus tie switches to electrically couple the second of the plurality of power sources to the first and second groups of the plurality of electric motors.
Clause 8. The vehicle (100) of any of the clauses above, wherein the power distribution circuitry (122, 300) includes: a plurality of electric power buses (302) electrically coupling the plurality of power sources (114) to the plurality of electric motors (118); and a plurality of source-selection circuitries (304) that are separate and independent, and electrically coupled to and between the plurality of electric power buses and the plurality of electric motors, and wherein a group (306A) of the plurality of source-selection circuitries is configured to switchably connect a first of the plurality of electric power buses (302A) and thereby a first of the plurality of power sources (114A) to a first group (308A) of the plurality of electric motors during normal operation of the first of the plurality of power sources, and a second of the plurality of electric power buses (302B) and thereby a second of the plurality of power sources (114B) to the first group of the plurality of electric motors automatically in direct response to a fault or failure at the first of the plurality of power sources.
Clause 9. The vehicle (100) of clause 8, wherein a second group (306B) of the plurality of source-selection circuitries (304) is configured to switchably connect the second of the plurality of electric power buses (302B) to a second group (308B) of the plurality of electric motors (118) during normal operation of the second of the plurality of power sources (114B), and the first of the plurality of electric power buses (302A) to the second group of the plurality of electric motors automatically in direct response to the fault or failure at the second of the plurality of power sources.
Clause 10. The vehicle (100) of any of the clauses above, wherein the power distribution circuitry (122, 400) includes: a plurality of electric power buses (402) electrically coupling the plurality of power sources (114) to the plurality of electric motors (118); a plurality of source-selection circuitries (404) that are separate and independent, and electrically coupled to and between the plurality of power sources and the plurality of electric power buses, and wherein a source-selection circuitry (404A) of the plurality of source-selection circuitries is configured to switchably connect a first of the plurality of power sources (114A) to a first of the plurality of electric power buses (402A) during normal operation of the first of the plurality of power sources, and a second of the plurality of power sources (114B) to the first of the plurality of electric power buses automatically in direct response to a fault or failure at the first of the plurality of power sources.
Clause 11. The vehicle (100) of clause 10, wherein a second source-selection circuitry (404B) of the plurality of source-selection circuitries (404) is configured to switchably connect the second of the plurality of power sources (114B) to the second of the plurality of electric power buses (402B) during normal operation of the second of the plurality of power sources, and the first of the plurality of power sources (114A) to the second of the plurality of electric power buses automatically in direct response to the fault or failure at the second of the plurality of power sources.
Clause 12. The vehicle (100) of any of the clauses above, wherein the power distribution circuitry (122, 500) includes: a plurality of electric power buses (502) with a plurality of feeders (504) electrically coupling the plurality of power sources (114) to the plurality of electric motors (118); and a plurality of interlocks (506) electrically coupled to and between the plurality of feeders across the plurality of electric power buses, including interlocks configured to electrically couple feeders of a first of the plurality of electric power buses (502A) to different feeders of different ones of others of the plurality of electric power buses (502B, 502C), automatically and in direct response to a fault or failure at a first of the plurality of power sources (114A) electrically coupled to the first of the plurality of electric power buses.
Clause 13. The vehicle (100) of clause 12, wherein the interlocks include switches (508) that are open during normal operation of the plurality of power sources (114), and the interlocks are configured to close a first of the switches (508A) to connect a first feeder (504A) of the first of the plurality of electric power buses (502A) and one of the feeders (504C) of a second of the plurality of electric power buses (502B), and close a second of the switches (508B) to connect a second feeder (504B) of the first of the plurality of electric power buses and one of the feeders (504D) of a third of the plurality of electric power buses (502C).
Clause 14. A method (600) of managing power in a vehicle (100), the method comprising: providing (602) the vehicle including a plurality of power sources (114), a propulsion system (116) including a plurality of electric motors (118) configured to power a plurality of propulsors (120) to generate propulsive forces that cause the vehicle to move, and power distribution circuitry (122); and delivering (604) direct current (DC) electric power from the plurality of power sources to the plurality of electric motors via the power distribution circuitry electrically coupling the plurality of power sources to the plurality of electric motors in an interleaved topology in which electric motors of the plurality of electric motors are alternately, electrically coupled to power sources of the plurality of power sources, each of the electric motors electrically coupled to a different one of the power sources than immediately adjacent ones of the electric motors.
Clause 15. The method (600) of clause 14, wherein delivering (604) the DC electric power includes delivering the DC electric power via the power distribution circuitry (122) in which each of the electric motors (118) is electrically coupled to a different one of the power sources (114) than the immediately adjacent ones of the electric motors in either or both direction of a pitch axis or a roll axis of the vehicle (100).
Clause 16. The method (600) of clause 14 or clause 15, wherein providing (602) the vehicle (100) includes providing the vehicle further including an airframe (104) with a fuselage (106) and one or more pairs of wings (108) that extend from opposing sides of the fuselage, the plurality of electric motors (118) are mounted to the one or more pairs of wings, and each wing has multiple ones of the electric motors mounted to the wing.
Clause 17. The method (600) of clause 16, wherein delivering (604) the DC electric power includes delivering the DC electric power via the power distribution circuitry (122) in which the multiple ones of the electric motors (118) include at least a first electric motor (M1, M3, M6, M8, M9, M11) and a second electric motor (M2, M4, M5, M7, M10, M12) electrically coupled to respectively a first and a second of the power sources (114A, 114B).
Clause 18. The method (600) of any of clauses 14 thru clause 17, wherein the power distribution circuitry (122, 200) includes a plurality of electric power buses (202) electrically coupling the plurality of power sources (114) to groups (204) of the plurality of electric motors (118), a plurality of switches (206) electrically coupled to and between the plurality of power sources and the plurality of electric power buses, and one or more bus tie switches (208) electrically coupled to and between power buses of the plurality of power sources, the plurality of switches and the one or more bus tie switches respectively closed and open during normal operation of the plurality of power sources, and wherein the method (600) further comprises opening (606) one of the plurality of switches to disconnect a first of the plurality of power sources (114A) from a first of the plurality of electric power buses (202A), and closing (608) one of the one or more bus tie switches to connect the first of the plurality of electric power buses to a second of the plurality of electric power buses (202B), automatically in direct response to a fault or failure at the first of the plurality of power sources.
Clause 19. The method (600) of clause 18, wherein the first of the plurality of electric power buses (202A) and the second of the plurality of electric power buses (202B) electrically couples the first of the plurality of power sources (114A) and a second of the plurality of power sources (114B) to respectively first and second groups (204A, 204B) of the plurality of electric motors (118), and wherein the one of the plurality of switches is opened (606), and the one of the one or more bus tie switches is closed (608), to electrically couple the second of the plurality of power sources to the first and second groups of the plurality of electric motors.
Clause 20. The method (600) of any of clause 14 thru clause 19, wherein the power distribution circuitry (122, 300) includes a plurality of electric power buses (302) electrically coupling the plurality of power sources (114) to the plurality of electric motors (118), and a plurality of source-selection circuitries (304) that are separate and independent, and electrically coupled to and between the plurality of electric power buses and the plurality of electric motors, and wherein the method (600) further comprises a group (306A) of the plurality of source-selection circuitries switchably connecting (610, 612) a first of the plurality of electric power buses (302A) and thereby a first of the plurality of power sources (114A) to a first group (308A) of the plurality of electric motors during normal operation of the first of the plurality of power sources, and a second of the plurality of electric power buses (302B) and thereby a second of the plurality of power sources (114B) to the first group of the plurality of electric motors automatically in direct response to a fault or failure at the first of the plurality of power sources.
Clause 21. The method (600) of clause 20, further comprising a second group (306B) of the plurality of source-selection circuitries (304) switchably connecting (614, 616) the second of the plurality of electric power buses (302B) to a second group (308B) of the plurality of electric motors (118) during normal operation of the second of the plurality of power sources (114B), and the first of the plurality of electric power buses (302A) to the second group of the plurality of electric motors automatically in direct response to the fault or failure at the second of the plurality of power sources.
Clause 22. The method (600) of any of clause 14 thru clause 21, wherein the power distribution circuitry (122, 400) includes a plurality of electric power buses (402) electrically coupling the plurality of power sources (114) to the plurality of electric motors (118), and a plurality of source-selection circuitries (404) that are separate and independent, and electrically coupled to and between the plurality of power sources and the plurality of electric power buses, and wherein the method further comprises a source-selection circuitry (404A) of the plurality of source-selection circuitries switchably connecting (618, 620) a first of the plurality of power sources (114A) to a first of the plurality of electric power buses (402A) during normal operation of the first of the plurality of power sources, and a second of the plurality of power sources (114B) to the first of the plurality of electric power buses automatically in direct response to a fault or failure at the first of the plurality of power sources.
Clause 23. The method (600) of clause 22, further comprising a second source-selection circuitry (404B) of the plurality of source-selection circuitries (404) switchably connecting (622, 624) the second of the plurality of power sources (114B) to the second of the plurality of electric power buses (402B) during normal operation of the second of the plurality of power sources, and the first of the plurality of power sources (114A) to the second of the plurality of electric power buses automatically in direct response to the fault or failure at the second of the plurality of power sources.
Clause 24. The method (600) of any of clause 14 thru clause 23, wherein the power distribution circuitry (122, 500) includes a plurality of electric power buses (502) with a plurality of feeders (504) electrically coupling the plurality of power sources (114) to the plurality of electric motors (118), and a plurality of interlocks (506) electrically coupled to and between the plurality of feeders across the plurality of electric power buses, and wherein the method further comprises interlocks of the plurality of interlocks electrically coupling (626) feeders of a first of the plurality of electric power buses (502A) to different feeders of different ones of others of the plurality of electric power buses (502B, 502C), automatically and in direct response to a fault or failure at a first of the plurality of power sources (114A) electrically coupled to the first of the plurality of electric power buses.
Clause 25. The method (600) of clause 24, wherein the interlocks include switches (508) that are open during normal operation of the plurality of power sources (114), and wherein the interlocks electrically coupling (626) the feeders includes the interlocks closing (628) a first of the switches (508A) to connect a first feeder (504A) of the first of the plurality of electric power buses (502A) and one of the feeders (504C) of a second of the plurality of electric power buses (502B), and closing (630) a second of the switches (508B) to connect a second feeder (504B) of the first of the plurality of electric power buses and one of the feeders (504D) of a third of the plurality of electric power buses (502C).

## Claims

1. A vehicle (100) comprising:
a basic structure (102); and, coupled to the basic structure,
a plurality of power sources (114);
a propulsion system (116) including a plurality of electric motors (118) configured to power a plurality of propulsors (120) to generate propulsive forces that cause the vehicle to move; and
power distribution circuitry (122) configured to deliver direct current (DC) electric power from the plurality of power sources to the plurality of electric motors, the power distribution circuitry electrically coupling the plurality of power sources to the plurality of electric motors in an interleaved topology in which electric motors of the plurality of electric motors are alternately, electrically coupled to power sources of the plurality of power sources, each of the electric motors electrically coupled to a different one of the power sources than immediately adjacent ones of the electric motors.

2. The vehicle (100) of claim 1, wherein the plurality of propulsors (120) include one or more of rotors, propellers or wheels.

3. The vehicle (100) of claim 1 or claim 2, wherein each of the electric motors (118) is electrically coupled to a different one of the power sources (114) than the immediately adjacent ones of the electric motors in either or both direction of a pitch axis or a roll axis of the vehicle.

4. The vehicle (100) of any preceding claim, wherein the plurality of the electric motors (118) include at least a first electric motor (M1, M3, M6, M8, M9, M11) and a second electric motor (M2, M4, M5, M7, M10, M12) electrically coupled to respectively a first and a second of the power sources (114A, 114B).

5. The vehicle (100) of any preceding claim, wherein:
the basic structure (102) includes an airframe (104) with a fuselage (106) and one or more pairs of wings (108) that extend from opposing sides of the fuselage, the plurality of electric motors (118) are mounted to the one or more pairs of wings, and each wing has multiple ones of the electric motors mounted to the wing.

6. The vehicle (100) of any preceding claim, wherein the power distribution circuitry (122, 200) includes:
a plurality of electric power buses (202) electrically coupling the plurality of power sources (114) to groups (204) of the plurality of electric motors (118);
a plurality of switches (206) electrically coupled to and between the plurality of power sources and the plurality of electric power buses, the plurality of switches closed during normal operation of the plurality of power sources;
one or more bus tie switches (208) electrically coupled to and between power buses of the plurality of power sources, the one or more bus tie switches open during normal operation of the plurality of power sources; and
power control circuitry (210) configured to open one of the plurality of switches to disconnect a first of the plurality of power sources (114A) from a first of the plurality of electric power buses (202A), and close one of the one or more bus tie switches to connect the first of the plurality of electric power buses to a second of the plurality of electric power buses (202B), automatically in direct response to a fault or failure at the first of the plurality of power sources

7. The vehicle (100) claim 6, wherein the first of the plurality of electric power buses (202A) and the second of the plurality of electric power buses (202B) electrically couples the first of the plurality of power sources (114A) and a second of the plurality of power sources (114B) to respectively first and second groups (204A, 204B) of the plurality of electric motors (118), and the power control circuitry (210) is configured to open the one of the plurality of switches and close the one of the one or more bus tie switches to electrically couple the second of the plurality of power sources to the first and second groups of the plurality of electric motors.

8. The vehicle (100) of any preceding claim, wherein the power distribution circuitry (122, 300) includes:
a plurality of electric power buses (302) electrically coupling the plurality of power sources (114) to the plurality of electric motors (118); and
a plurality of source-selection circuitries (304) that are separate and independent, and electrically coupled to and between the plurality of electric power buses and the plurality of electric motors, and
wherein:
a group (306A) of the plurality of source-selection circuitries is configured to switchably connect a first of the plurality of electric power buses (302A) and thereby a first of the plurality of power sources (114A) to a first group (308A) of the plurality of electric motors during normal operation of the first of the plurality of power sources, and a second of the plurality of electric power buses (302B) and thereby a second of the plurality of power sources (114B) to the first group of the plurality of electric motors automatically in direct response to a fault or failure at the first of the plurality of power sources

9. The vehicle (100) claim 8, a second group (306B) of the plurality of source-selection circuitries (304) is configured to switchably connect the second of the plurality of electric power buses (302B) to a second group (308B) of the plurality of electric motors (118) during normal operation of the second of the plurality of power sources (114B), and the first of the plurality of electric power buses (302A) to the second group of the plurality of electric motors automatically in direct response to the fault or failure at the second of the plurality of power sources.

10. The vehicle (100) of any preceding claim, wherein the power distribution circuitry (122, 400) includes:
a plurality of electric power buses (402) electrically coupling the plurality of power sources (114) to the plurality of electric motors (118);
a plurality of source-selection circuitries (404) that are separate and independent, and electrically coupled to and between the plurality of power sources and the plurality of electric power buses, and
wherein:
a source-selection circuitry (404A) of the plurality of source-selection circuitries is configured to switchably connect a first of the plurality of power sources (114A) to a first of the plurality of electric power buses (402A) during normal operation of the first of the plurality of power sources, and a second of the plurality of power sources (114B) to the first of the plurality of electric power buses automatically in direct response to a fault or failure at the first of the plurality of power sources

11. The vehicle (100) claim 10, a second source-selection circuitry (404B) of the plurality of source-selection circuitries (404) is configured to switchably connect the second of the plurality of power sources (114B) to the second of the plurality of electric power buses (402B) during normal operation of the second of the plurality of power sources, and the first of the plurality of power sources (114A) to the second of the plurality of electric power buses automatically in direct response to the fault or failure at the second of the plurality of power sources.

12. The vehicle (100) of any preceding claim, wherein the power distribution circuitry (122, 500) includes:
a plurality of electric power buses (502) with a plurality of feeders (504) electrically coupling the plurality of power sources (114) to the plurality of electric motors (118); and
a plurality of interlocks (506) electrically coupled to and between the plurality of feeders across the plurality of electric power buses, including interlocks configured to electrically couple feeders of a first of the plurality of electric power buses (502A) to different feeders of different ones of others of the plurality of electric power buses (502B, 502C), automatically and in direct response to a fault or failure at a first of the plurality of power sources (114A) electrically coupled to the first of the plurality of electric power buses

13. The vehicle (100) claim 12, wherein the interlocks include switches (508) that are open during normal operation of the plurality of power sources (114), and the interlocks are configured to close a first of the switches (508A) to connect a first feeder (504A) of the first of the plurality of electric power buses (502A) and one of the feeders (504C) of a second of the plurality of electric power buses (502B), and close a second of the switches (508B) to connect a second feeder (504B) of the first of the plurality of electric power buses and one of the feeders (504D) of a third of the plurality of electric power buses (502C).

14. A method (600) of managing power in the vehicle (100) of any preceding claim, the method comprising:
delivering (604) direct current (DC) electric power from the plurality of power sources to the plurality of electric motors via the power distribution circuitry.

15. The method (600) of claim 14, wherein the power distribution circuitry (122, 200) includes a plurality of electric power buses (202) electrically coupling the plurality of power sources (114) to groups (204) of the plurality of electric motors (118), a plurality of switches (206) electrically coupled to and between the plurality of power sources and the plurality of electric power buses, and one or more bus tie switches (208) electrically coupled to and between power buses of the plurality of power sources, the plurality of switches and the one or more bus tie switches respectively closed and open during normal operation of the plurality of power sources, and
wherein the method (600) further comprises opening (606) one of the plurality of switches to disconnect a first of the plurality of power sources (114A) from a first of the plurality of electric power buses (202A), and closing (608) one of the one or more bus tie switches to connect the first of the plurality of electric power buses to a second of the plurality of electric power buses (202B), automatically in direct response to a fault or failure at the first of the plurality of power sources.
